# EUROPEAN PATENT APPLICATION

(11) **EP 4 050 879 A1**
(43) Date of publication of application: **31.08.2022**
(21) Application number: 20878620.2
(22) Date of filing: 09.09.2020
(51) Int. Cl.: H04N 5/232, G09G 5/00, G09G 5/36, G09G 5/377, H04N 5/66, H04N 7/18, H04N 21/2187, H04N 21/431

(54) **DISPLAY CONTROL DEVICE, DISPLAY CONTROL METHOD AND RECORDING MEDIUM**

(30) Priority: 21.10.2019 JP 2019192183
(71) Applicant: Sony Group Corporation, Tokyo 108-0075 (JP)
(72) Inventor: KO, Kentaro, Tokyo 108-0075 (JP); GOHARA, Hiroki, Tokyo 108-0075 (JP); FURUSAWA, Koji, Tokyo 141-0022 (JP)
(74) Representative: MFG Patentanwälte Meyer-Wildhagen Meggle-Freund Gerhard PartG mbB
(86) International application number: PCT/JP2020/034089
(87) International publication number: WO 2021/079636

(57) **Abstract**

A display control device includes a control unit (170) configured to control a display device (10) so as to display videos of real space captured by a plurality of cameras (20) having adjacent imaging regions that partially overlap with each other. The control unit (170) controls the display device (10) so as to switch and display the videos including the subject on the basis of the position information of the subject in the overlapping region between the adjacent imaging regions.

## Description

### Field

The present disclosure relates to a display control device, a display control method, and a recording medium.

### Background

In recent years, techniques of virtual reality (VR), augmented reality (AR), computer vision, and the like, have been actively developed. For example, in omnidirectional imaging, three-dimensional imaging (volumetric imaging), and the like, there is an increasing need for imaging with a plurality of (for example, several tens of) cameras. Patent Literature 1 discloses a technique of receiving input images from a camera array, updating a stitching point, and stitching the input images into one image in accordance with the updated stitching point.

### Citation List

### Patent Literature

Patent Literature 1: JP 2010-50842 A

### Summary

### Technical Problem

In the above-described related art, high-load processing is required to stitch images. It is therefore desired to display videos captured by a plurality of cameras even in a device having low processing capability without performing high-load processing.

The present disclosure therefore proposes a display control device, a display control method, and a recording medium that can simplify control of displaying videos captured by a plurality of cameras.

### Solution to Problem

To solve the problems described above, a display control device according to an embodiment of the present disclosure includes: a control unit configured to control a display device so as to display videos of real space captured by a plurality of cameras having adjacent imaging regions that partially overlap with each other, wherein the control unit controls the display device so as to switch a video among the videos including a subject and display the video on a basis of position information of the subject in an overlapping region where the adjacent imaging regions overlap with each other.

Moreover, a display control method according to an embodiment of the present disclosure to be performed by a computer includes: controlling a display device so as to display videos of real space captured by a plurality of cameras having adjacent imaging regions that partially overlap with each other; and controlling the display device so as to switch a video among the videos including a subject and display the video on a basis of position information of the subject in an overlapping region where the adjacent imaging regions overlap with each other.

Moreover, a computer-readable recording medium according to an embodiment of the present disclosure stores a program that causes a computer to implement: controlling a display device so as to display videos of real space captured by a plurality of cameras having adjacent imaging regions that partially overlap with each other; and controlling the display device so as to switch a video among the videos including a subject and display the video on a basis of position information of the subject in an overlapping region where the adjacent imaging regions overlap with each other.

### Brief Description of Drawings

FIG. 1 is a diagram for explaining an example of outline of a multi-camera system according to an embodiment.
FIG. 2 is a diagram illustrating an example of a relationship between an imaging status and a display status according to the embodiment.
FIG. 3 is a diagram illustrating an example of a relationship between an imaging status and a display status according to the embodiment.
FIG. 4 is a diagram illustrating an example of a relationship between an imaging status and a display status according to the embodiment.
FIG. 5 is a diagram illustrating an example of a relationship between an imaging status and a display status according to the embodiment.
FIG. 6 is a diagram illustrating an example of a relationship between an imaging status and a display status according to the embodiment.
FIG. 7 is a diagram for explaining a display example of a video on a virtual plane according to the embodiment.
FIG. 8 is a diagram illustrating a configuration example of a head mounted display according to the embodiment.
FIG. 9 is a diagram for explaining an example of a switching condition according to the embodiment.
FIG. 10 is a flowchart illustrating an example of processing procedure to be executed by the head mounted display according to the embodiment.
FIG. 11 is a diagram illustrating an example of an imaging status of the multi-camera system according to the embodiment.
FIG. 12 is a diagram illustrating an operation example and a display example of the head mounted display according to the embodiment.
FIG. 13 is a diagram illustrating an operation example and a display example of the head mounted display according to the embodiment.
FIG. 14 is a diagram illustrating an operation example and a display example of the head mounted display according to the embodiment.
FIG. 15 is a diagram illustrating an operation example and a display example of the head mounted display according to the embodiment.
FIG. 16 is a diagram for explaining a configuration example of cameras of a multi-camera system of modification (1) of the embodiment.
FIG. 17 is a diagram illustrating an example of switching of a video of a head mounted display according to modification (2) of the embodiment.
FIG. 18 is a diagram illustrating an example of switching of a video of a head mounted display according to modification (2) of the embodiment.
FIG. 19 is a hardware configuration diagram illustrating an example of a computer that implements functions of a display control device.

### Description of Embodiments

Hereinafter, an embodiment of the present disclosure will be described in detail with reference to the drawings. Note that in the following embodiment, the same reference numeral will be assigned to the same parts, and redundant description will be omitted.

### (Embodiment)

### [Outline of multi-camera system according to embodiment]

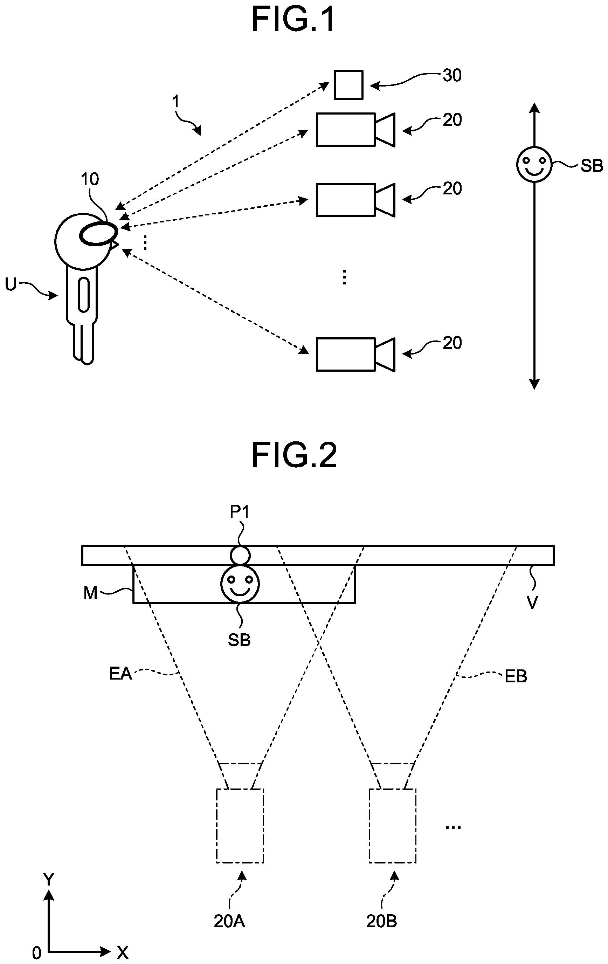

FIG. 1 is a diagram for explaining an example of outline of a multi-camera system according to an embodiment. As illustrated in FIG. 1, the multi-camera system 1 includes a head mounted display (HMD) 10, a plurality of cameras 20, and a position measurement device 30. The HMD 10, the plurality of cameras 20, and the position measurement device 30 are, for example, configured to be able to perform communication via a network or directly perform communication without the network.

The HMD 10 is an example of a display control device that is worn on the head of a user U and displays a generated image on a display device (display) in front of the eyes. Although a case will be described where the HMD is a shielding type HMD which covers the entire field of view of the user U, the HMD 10 may be an open type HMD which does not cover the entire field of view of the user U. The HMD 10 can also project different videos to the left and right eyes and can present a 3D video by displaying videos having parallax to the left and right eyes. The HMD 10 has a function of displaying videos of real space captured by the plurality of cameras 20.

For example, the HMD 10 presents virtual space to the user U by displaying a video on a display, or the like, provided in front of the eyes of the user U. The video is video data and includes, for example, an omnidirectional image capable of viewing a video with an arbitrary viewing angle from a fixed viewing position. The video data includes, for example, videos of a plurality of viewpoints, a video obtained by synthesizing videos of a plurality of viewpoints, and the like.

The plurality of cameras 20 is provided at different positions outside the HMD 10 and captures images of the real space of the provided place. Each of the plurality of cameras 20 captures images of different partial regions in a range where a moving subject SB can move. The subject SB includes, for example, a moving person, an object, and the like. The plurality of cameras 20 may be configured with only a single type of imaging device or may be configured with a combination of types of imaging devices having different resolutions, lenses, and the like. The plurality of cameras 20 includes, for example, a stereo camera, a time of flight (ToF) camera, a monocular camera, an infrared camera, a depth camera, a video camera, and the like. The plurality of cameras 20 is arranged at an imaging place such that part of the videos captured by the adjacent cameras 20 overlaps with each other. In order to satisfy this arrangement condition, in the example illustrated in FIG. 1, the plurality of cameras 20 is arranged at different positions on a straight line, but the arrangement condition is not limited thereto. For example, if the arrangement condition is satisfied, the plurality of cameras 20 may be arranged on a curve or may be sterically arranged.

In the present embodiment, angles (angles) of the plurality of cameras 20 at the time of imaging are fixed. In other words, imaging regions to be imaged by the plurality of cameras 20 are fixed. The plurality of cameras 20 can adjust, for example, positions, viewing angles, lens distortion, and the like, before and after imaging. The plurality of cameras 20 captures videos in synchronization with one another. The plurality of cameras 20 supplies the captured videos to the HMD 10. For example, the plurality of cameras 20 supplies videos obtained by imaging the moving subject SB to the HMD 10. The plurality of cameras 20 of the present embodiment is arranged at different positions along a region where the subject SB can move.

The position measurement device 30 is provided outside the HMD 10 and measures the position of the subject SB. For example, the position measurement device 30 performs measurement on the basis of a reference from which a relative position between the subject SB and the camera 20 can be derived. The plurality of position measurement devices 30 includes, for example, a distance sensor, a stereo camera, and the like. The position measurement device 30 may be implemented with one device or plurality of devices as long as the relative position between the subject SB and the camera 20 can be derived. The position measurement device 30 supplies the measured position information to the HMD 10. The position information includes, for example, information such as relative positions between the position of the subject SB and the plurality of cameras 20, and date and time of measurement. For example, the position measurement device 30 may measure the position information of the subject SB on the basis of a marker, or the like, attached to the subject SB. The position measurement device 30 may be, for example, mounted on the subject SB. The position measurement device 30 may measure the position of the subject SB using, for example, a global navigation satellite system (GNSS) represented by a global positioning system (GPS), map matching, WiFi (registered trademark) positioning, magnetic positioning, Bluetooth (registered trademark) low energy (BLE) positioning, beacon positioning, or the like.

The HMD 10 projects (displays) the videos captured by the plurality of cameras 20 on a virtual plane to reproduce the videos on the surface of the virtual plane. In other words, the HMD 10 reproduces the videos in front of the eyes of the user U. The virtual plane is a plane on which videos are projected inside the virtual space. For example, in a case where the video is stereo, the video is more naturally viewed by a direction of the virtual plane being made to match a direction of the subject SB. For example, in a case where the subject SB is a human standing upright toward the camera 20, an optimal stereo video can be projected if the virtual plane matches a coronal plane of the human. This is because the coronal plane is the closest when a human is represented in a plane. While in the present embodiment, a case where the HMD 10 projects a video on the virtual plane will be described, the present disclosure is not limited thereto. For example, the HMD 10 may project a video on a surface or an inner surface such as a spherical surface, an elliptical surface, and a stereoscopic surface. Further, the HMD 10 has a function of switching a video among a plurality of videos captured by the plurality of cameras 20 and displaying the video on the basis of the position information of the subject SB measured by the position measurement device 30.

### [Relationship between imaging status and display status according to embodiment]

FIGS. 2 to 6 are diagrams illustrating an example of a relationship between an imaging status and a display status according to the embodiment. Note that in the following description, for the sake of simplicity, relationships between the imaging statuses of two adjacent cameras 20A and 20B among the plurality of cameras 20 and the display status of the HMD 10 will be described. In addition, the camera 20A and the camera 20B will be simply described as the camera 20 in a case where they are not distinguished from each other. In FIG. 2, an X axis is a horizontal direction and is a moving direction of the subject SB. A Y axis is a vertical direction and a depth direction of the plurality of cameras 20.

In the scene illustrated in FIG. 2, the subject SB is located at a position P1 inside an imaging region EA of the camera 20A and is not located inside an imaging region EB of the camera 20B. In this case, the camera 20A captures a video including the subject SB and supplies the video to the HMD 10. The camera 20B captures a video not including the subject SB and supplies the video to the HMD 10. The subject SB is included in the video of the camera 20A, and thus, the HMD 10 displays the video of the camera 20A on a virtual plane V as a projection video M. As a result, the user U visually recognizes the subject SB appearing in the video of the camera 20A by the HMD 10.

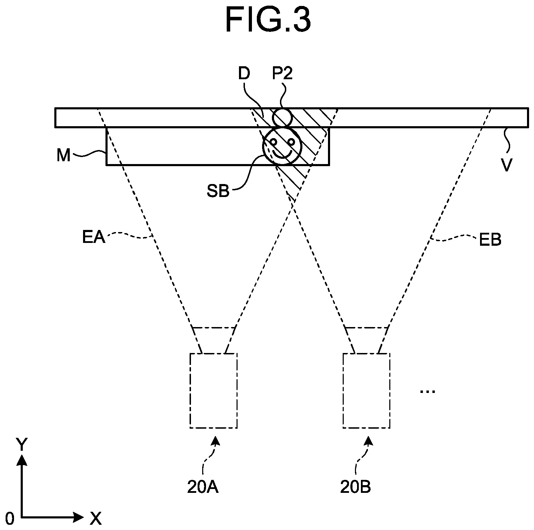

In the scene illustrated in FIG. 3, the subject SB is located at a position P2 inside the imaging region EA of the camera 20A and inside the imaging region EB of the camera 20B by moving in the X-axis direction from the position P1. In other words, the subject SB is located inside an overlapping region D where the imaging region EA overlaps with the imaging region EB. In this case, the camera 20A and the camera 20B capture videos including the subject SB and supply the videos to the HMD 10. The HMD 10 displays the video of the camera 20A on the virtual plane V as the projection video M on the basis of the measurement result measured by the position measurement device 30. As a result, the user U visually recognizes the subject SB appearing in the video of the camera 20A by the HMD 10.

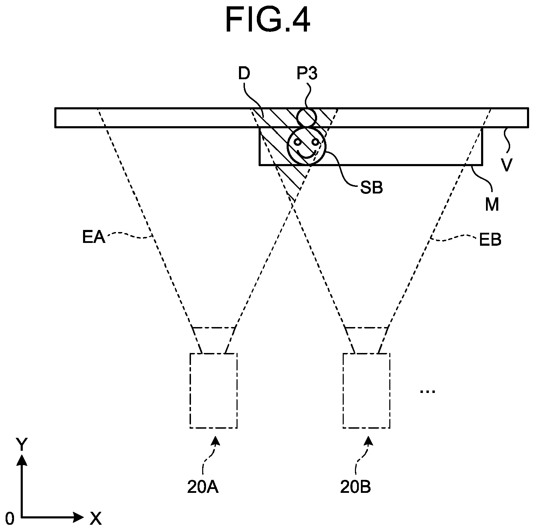

In the scene illustrated in FIG. 4, the subject SB is located at a position P3 closer to the imaging region EB in the overlapping region D where the imaging region EA of the camera 20A overlaps with the imaging region EB of the camera 20B by moving in the X-axis direction from the position P2. In this case, the camera 20A and the camera 20B capture videos including the subject SB and supply the videos to the HMD 10. The HMD 10 displays the video of the camera 20B on the virtual plane V as the projection video M on the basis of the measurement result measured by the position measurement device 30. As a result, the user U visually recognizes the subject SB appearing in the video of the camera 20B by the HMD 10.

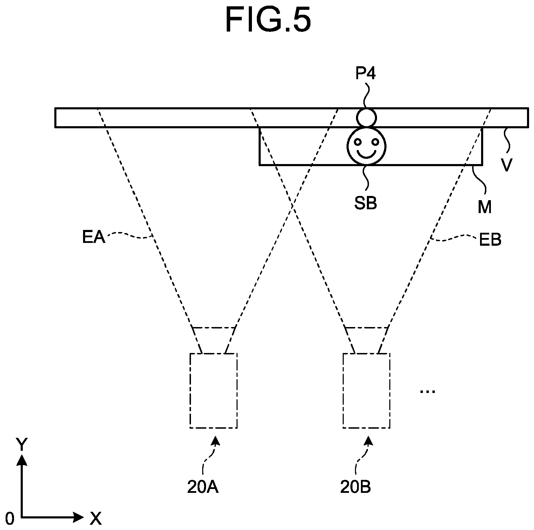

In the scene illustrated in FIG. 5, the subject SB is not located inside the imaging region EA of the camera 20A, but located at a position P4 inside the imaging region EB of the camera 20B by moving in the X-axis direction from the position P3. In this case, the camera 20A captures a video not including the subject SB and supplies the video to the HMD 10. The camera 20B captures a video including the subject SB and supplies the video to the HMD 10. The subject SB is included in the video of the camera 20B, and thus, the HMD 10 displays the video of the camera 20B on the virtual plane V as a projection video M. As a result, the user U visually recognizes the subject SB appearing in the video of the camera 20B by the HMD 10.

As illustrated in the scenes of FIGS. 2 to 5, if the subject SB moves in the X-axis direction, the HMD 10 can display the videos of the plurality of cameras 20 without stitching the videos by controlling switching between the videos of the adjacent cameras 20. In a case where the measurement position of the subject SB moves in the Y-axis direction (depth direction), the HMD 10 can cause the virtual plane V to follow the subject SB.

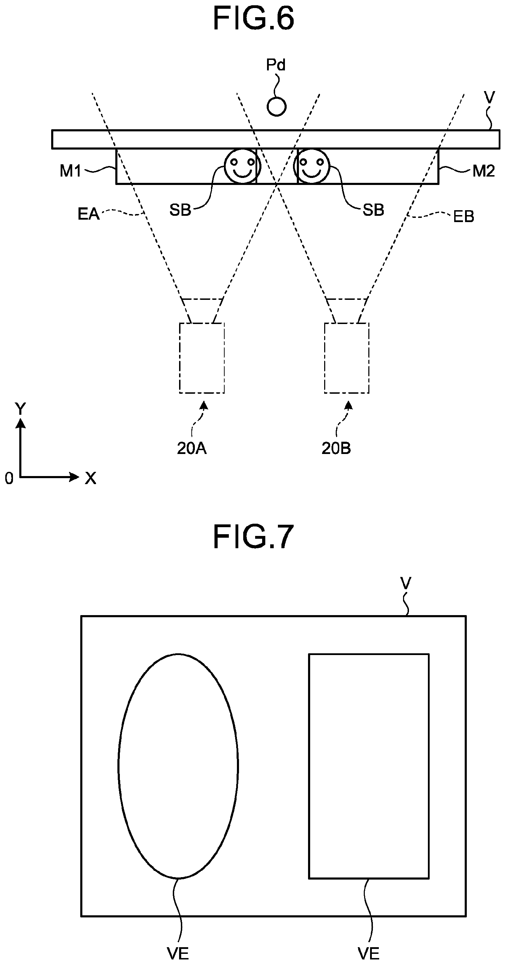

For example, as illustrated in FIG. 6, it is assumed that the HMD 10 fixes a depth distance between the virtual plane V and the camera 20 along the Y-axis direction and does not cause a measurement position Pd of the subject SB to match the virtual plane V. In this case, the videos M1 and M2 of the subject SB of the camera 20A and the camera 20B are projected at different positions on the virtual plane V by the HMD 10. In this state, if the subject SB moves between the camera 20A and the camera 20B, the user U visually recognizes with the HMD 10, a phenomenon that the position of the subject SB changes unexpectedly.

In order to avoid such a phenomenon, the HMD 10 displays a video by aligning the position of the depth of the virtual plane V with the measured position of the subject SB as illustrated in FIGS. 2 to 5. As a result, the HMD 10 can allow the user U to visually recognize a continuous video even if the video is switched among the videos of the plurality of cameras 20.

FIG. 7 is a diagram for explaining a display example of a video on the virtual plane V according to the embodiment. The HMD 10 has a function of cutting out a region of the subject SB from the virtual plane V around the position of the subject SB measured by the position measurement device 30. As illustrated in FIG. 7, the HMD 10 can cut out a region of the subject SB from the virtual plane V. By cutting out the region of the subject SB, the HMD 10 allows the user U to more naturally visually recognize fusion (synthesis) of the video of the subject SB and the background video. The HMD 10 cuts out a region VE of the subject SB in, for example, an elliptical shape, a square shape, a circular shape, a polygonal shape, or the like. For example, a creator of the video can arbitrarily set the shape of the cut-out region VE in accordance with video content, the shape of the subject SB, and the like.

### [Configuration example of head mounted display according to embodiment]

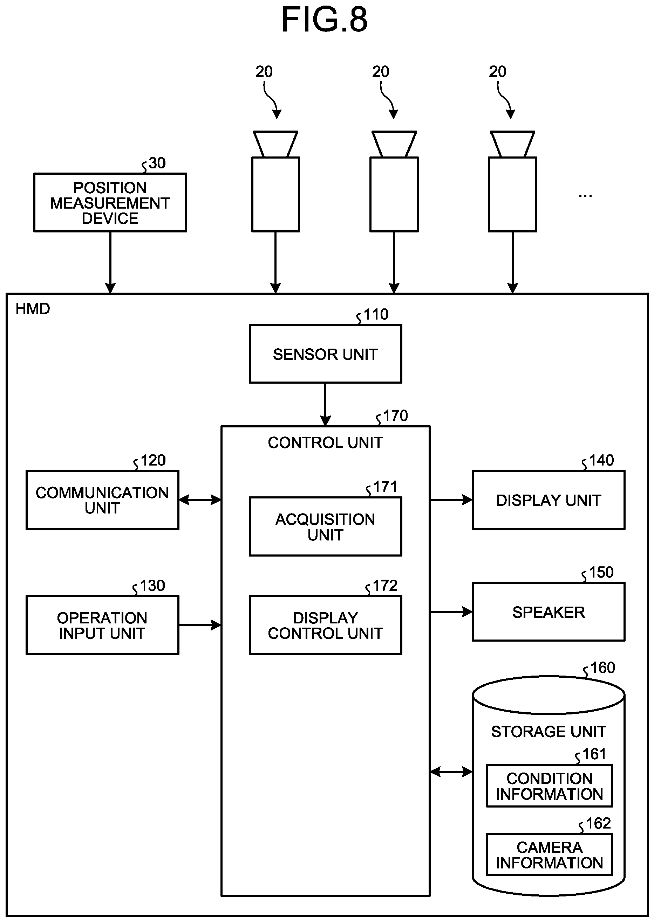

FIG. 8 is a diagram illustrating a configuration example of a head mounted display 10 according to the embodiment. As illustrated in FIG. 8, the HMD 10 includes a sensor unit 110, a communication unit 120, an operation input unit 130, a display unit 140, a speaker 150, a storage unit 160, and a control unit 170.

The sensor unit 110 senses a user state or a surrounding situation at a predetermined cycle and outputs the sensed information to the control unit 170. The sensor unit 110 includes, for example, a plurality of sensors such as an inward camera, an outward camera, a microphone, an inertial measurement unit (IMU), and an orientation sensor. The sensor unit 110 supplies a sensing result to the control unit 170.

The communication unit 120 is communicably connected to external electronic equipment such as the plurality of cameras 20 and the position measurement device 30 in a wired or wireless manner and transmits and receives data. The communication unit 120 is communicably connected to external electronic equipment, or the like, for example, through a wired/wireless local area network (LAN), Wi-Fi (registered trademark), Bluetooth (registered trademark), or the like. The communication unit 120 supplies the received video of the camera 20, and the like, to the control unit 170. The communication unit 120 supplies the position information, and the like, received from the position measurement device 30 to the control unit 170.

The operation input unit 130 detects an operation input of the user U to the HMD 10 and supplies operation input information to the control unit 170. The operation input unit 130 may be, for example, a touch panel, a button, a switch, a lever, or the like. The operation input unit 130 may be implemented using a controller separate from the HMD 10.

The display unit 140 includes left and right screens fixed so as to correspond to the left and right eyes of the user U who wears the HMD 10 and displays the left-eye image and the right-eye image. If the HMD 10 is worn on the head of the user U, the display unit 140 is positioned in front of the eyes of the user U. The display unit 140 is provided so as to cover at least the entire visual field of the user U. The screen of the display unit 140 may be, for example, a display panel such as a liquid crystal display (LCD) or an organic electro luminescence (EL) display. The display unit 140 is an example of a display device.

The speaker 150 is configured as a headphone to be worn on the head of the user U who wears the HMD 10 and reproduces an audio signal under the control of the control unit 170. Further, the speaker 150 is not limited to the headphone type and may be configured as an earphone or a bone conduction speaker.

The storage unit 160 stores various kinds of data and programs. For example, the storage unit 160 can store videos from the plurality of cameras 20, position information from the position measurement device 30, and the like. The storage unit 160 stores various kinds of information such as condition information 161 and camera information 162. The condition information 161 includes, for example, information indicating a switching condition in the overlapping region D. The camera information 162 includes, for example, information indicating a position, an imaging region, specifications, an identification number, and the like, for each of the plurality of cameras 20.

The storage unit 160 is electrically connected to, for example, the control unit 170, and the like. The storage unit 160 stores, for example, information for determining switching of the video, and the like. The storage unit 14 is, for example, a random access memory (RAM), a semiconductor memory element such as a flash memory, a hard disk, an optical disk, or the like. Note that the storage unit 160 may be provided in a storage device accessible by the HMD 10 via a network. In the present embodiment, the storage unit 160 is an example of a recording medium.

The control unit 170 controls the HMD 10. The control unit 170 is implemented by, for example, a central processing unit (CPU), a micro control unit (MCU), or the like. The control unit 170 may be implemented by, for example, an integrated circuit such as an application specific integrated circuit (ASIC) and a field-programmable gate array (FPGA). The control unit 170 may include a read only memory (ROM) that stores programs to be used, operation parameters, and the like, and a RAM that temporarily stores parameters, and the like, that change as appropriate. In the present embodiment, the control unit 170 is an example of a display control device and a computer.

The control unit 170 includes functional units such as an acquisition unit 171 and a display control unit 172. Each functional unit of the control unit 170 is implemented by the control unit 170 executing a program stored in the HMD 10 using a RAM, or the like, as a work area.

The acquisition unit 171 acquires each of the videos captured by the plurality of cameras 20 outside the HMD 10. The acquisition unit 171, for example, acquires videos from the plurality of cameras 20 via the communication unit 120. The acquisition unit 171 acquires position information measured by the position measurement device 30 outside the HMD 10 via the communication unit 120. For example, the acquisition unit 171 may be configured to acquire the video and the position information recorded in the recording medium.

The display control unit 172 controls the display unit 140 so as to display videos of the real space captured by the plurality of cameras 20 provided at different positions. The display control unit 172 controls the display unit 140 so as to switch and display videos including the subject SB among the plurality of videos captured by the plurality of cameras 20. The display control unit 172 controls the display unit 140 so as to switch and display the videos including the subject SB on the basis of the position information of the subject SB in the overlapping region D between the adjacent imaging regions. The display control unit 172 controls the display unit 140 so as to switch and display the videos including the subject SB on the virtual plane V on the basis of the position information of the subject SB in the overlapping region D. The display control unit 172 controls the display unit 140 so as to switch and display the videos including the subject SB on the basis of whether or not the position information of the subject SB satisfies the switching condition of the overlapping region D. Note that the switching condition is acquired from, for example, the condition information 161 in the storage unit 160, a storage device outside the HMD 10, or the like. The switching condition has, for example, a boundary for dividing the overlapping region D. In this case, the display control unit 172 determines whether or not the position information of the subject SB satisfies the switching condition of the overlapping region D on the basis of a positional relationship between the position information of the subject SB acquired by the acquisition unit 171 and the boundary of the overlapping region D.

In a case where the position information of the subject SB does not satisfy the switching condition, the display control unit 172 controls the display unit 140 so as to display the video of one camera 20 that has captured a video of the subject SB. In a case where the position information of the subject SB satisfies the switching condition, the display control unit 172 controls the display unit 140 so as to display the video of the camera 20 that has captured a video of the subject SB and that is adjacent to the one camera 20. In other words, the display control unit 172 controls the display unit 140 so as to switch the video between the videos of the adjacent cameras 20 and display the video on the basis of the position of the subject SB in the overlapping region D. An example of a video switching method will be described later.

The display control unit 172 controls the display unit 140 so as to display a video obtained by cutting out a region of the subject SB on the virtual plane V. The display control unit 172 controls the display unit 140 so as to synthesize and display the video including the subject SB and the surrounding video indicating the surroundings of the video. The display control unit 172 controls the display unit 140 so as to display a video obtained by synthesizing a first video including the subject SB and a second video having resolution lower than resolution of the first video. The first video is, for example, a video including the subject SB and has high resolution. The second video is, for example, a low-resolution video displayed around the first video on the virtual plane. For example, the display control unit 172 reduces the resolution of the second video by making a pixel size of the second video smaller than a pixel size of the first video. The display control unit 172 may acquire a low-resolution video from the camera 20 by the acquisition unit 171. The display control unit 172 can reduce the resolution of the video not including the subject SB and display the video on the display unit 140 by synthesizing the low-resolution second video around the first video.

For example, in related art, stitching processing is performed to make it appear as if a plurality of videos were one video. On the other hand, the display control unit 172 switches the video between the videos of the adjacent cameras 20 and displays the video on the display unit 140 without executing the stitching processing. In this case, for example, the display control unit 172 superimposes at least part of the two videos and displays only one video in the superimposed region or displays a video obtained by adding and averaging pixel values in the superimposed region. As a result, the display control unit 172 does not need to execute high-load processing such as stitching processing, so that the control unit 170 can be implemented with a computer, or the like, having low processing capability. Thus, the HMD 10 does not need to use expensive hardware, so that cost reduction can be achieved. For example, in a case where the camera 20 can capture videos at a plurality of kinds of resolution, the display control unit 172 may give an instruction as to resolution at which the camera 20 captures videos via the communication unit 120.

The functional configuration example of the HMD 10 according to the present embodiment has been described above. Note that the configuration described above using FIG. 8 is merely an example, and the functional configuration of the HMD 10 according to the present embodiment is not limited to such an example. The functional configuration of the HMD 10 according to the present embodiment can be flexibly modified in accordance with specifications and operation.

### [Example of switching condition according to embodiment]

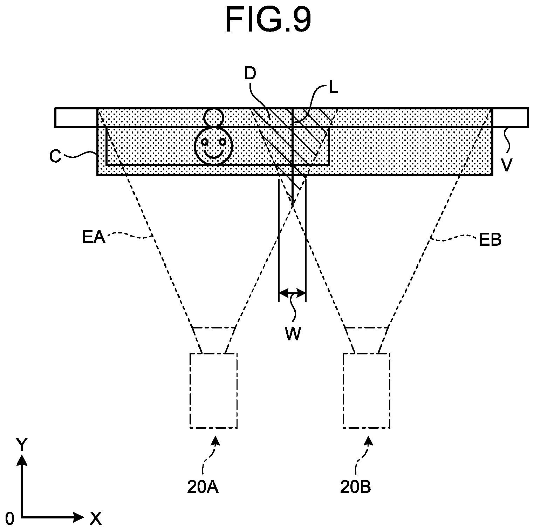

FIG. 9 is a diagram for explaining an example of a switching condition according to the embodiment. As illustrated in FIG. 9, the HMD 10 stores condition information 161 indicating the switching condition in the overlapping region D in the storage unit 160. In the example illustrated in FIG. 9, among the plurality of cameras 20, only cameras 20A and 20B having the same specifications, and the like, are illustrated, and other cameras 20 are omitted. The condition information 161 includes information indicating the boundary L dividing the overlapping region D. The boundary L is, for example, a threshold for determining the position of the subject SB in the overlapping region D. The subject SB has a movement range C which is a range including part of the imaging region EA and the imaging region EB. The movement range C is, for example, a range in which the subject SB can move. In this case, the boundary L is arbitrarily set inside a range W from a point where the imaging region EA intersects with the movement range C to a point where the imaging region EB intersects with the movement range C in the overlapping region D. While in the example illustrated in FIG. 9, the boundary L is set as a straight line passing through the intersection of the imaging region EA and the imaging region EB, the boundary L is not limited thereto. The switching condition may be set by, for example, an arbitrary region in the overlapping region D, a curve, or the like.

While in the present embodiment, a case will be described where the condition information 161 indicates the overlapping region D, the boundary L in the overlapping region D and the switching condition, the condition information 161 is not limited thereto. For example, the condition information 161 may indicate a plurality of divided regions obtained by dividing the overlapping region D and a switching condition.

### [Processing procedure of head mounted display 10 according to embodiment]

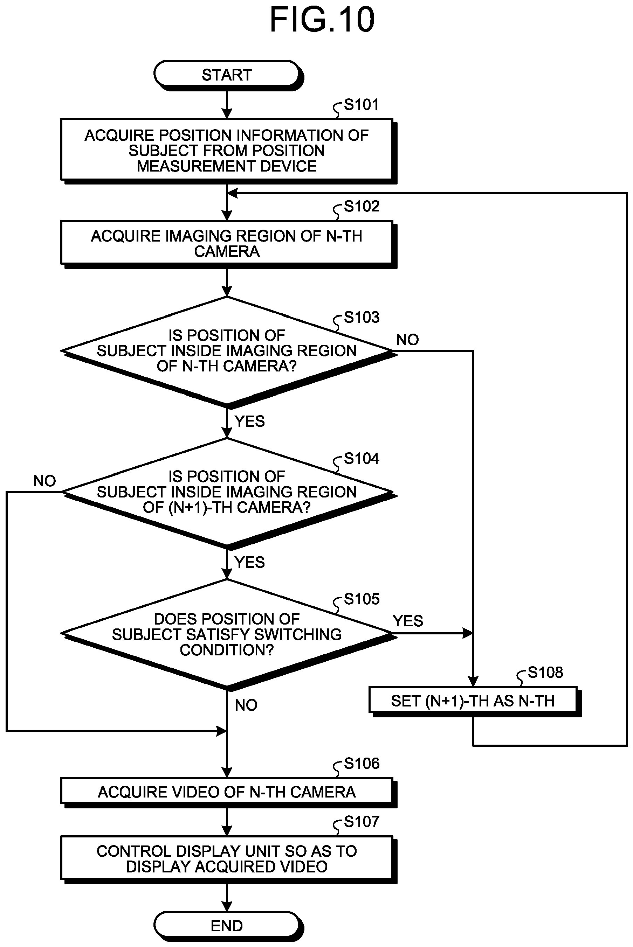

Next, an example of a processing procedure of the head mounted display 10 according to the embodiment will be described with reference to the drawing of FIG. 10. FIG. 10 is a flowchart illustrating an example of processing procedure to be executed by the head mounted display 10 according to the embodiment. In the processing procedure illustrated in FIG. 10, for example, it is assumed that the plurality of cameras 20 has an overlapping region D between the adjacent cameras 20, and the HMD 10 displays a video of one camera 20 among the plurality of cameras 20 to the user U. The processing procedure illustrated in FIG. 10 is implemented by the control unit 170 of the HMD 10 executing a program. The processing procedure illustrated in FIG. 10 is repeatedly executed by the control unit 170 of the HMD 10. The processing procedure illustrated in FIG. 10 is executed by the control unit 170 in a state where the plurality of cameras 20 images the real space in synchronization with one another.

As illustrated in FIG. 10, the control unit 170 of the HMD 10 acquires the position information of the subject SB from the position measurement device 30 (Step S101). For example, the control unit 170 acquires the position information of the subject SB via the communication unit 120 and stores the position information in the storage unit 160. If the control unit 170 finishes the processing in Step S101, the processing proceeds to Step S102.

The control unit 170 acquires an imaging region of the N-th camera 20 (Step S102). N is an integer. For example, it is assumed that different integers starting from 1 are sequentially assigned to the plurality of cameras 20. In this case, the control unit 170 acquires information indicating the N-th imaging region from the camera information 162 of the storage unit 160. Note that, for example, an initial value is set as the N-th, or a number assigned to the camera 20 displaying the video is set as the N-th. When the control unit 170 finishes the processing in Step S102, the processing proceeds to Step S103.

The control unit 170 determines whether or not the position of the subject SB is inside the imaging region of the N-th camera 20 (Step S103). For example, the control unit 170 compares the position information of the subject SB with the imaging region of the N-th camera 20 indicated by the camera information 162 and makes a determination on the basis of the comparison result. In a case where the control unit 170 determines that the position of the subject SB is inside the imaging region of the N-th camera 20 (Step S103: Yes), the processing proceeds to Step S104.

The control unit 170 determines whether or not the position of the subject SB is inside the imaging region of the (N+1)-th camera 20 (Step S104). The (N+1)-th camera 20 means the camera 20 provided next to the N-th camera 20. For example, the control unit 170 compares the position information of the subject SB with the imaging region of the (N+1)-th camera 20 indicated by the camera information 162 and makes a determination on the basis of the comparison result.

In a case where the control unit 170 determines that the position of the subject SB is inside the imaging region of the (N+1)-th camera 20 (Step S104: Yes), the processing proceeds to Step S105, because the subject SB is located in the overlapping region D between the N-th camera 20 and the (N+1)-th camera 20.

The control unit 170 determines whether or not the position of the subject SB satisfies the switching condition (Step S105). For example, the control unit 170 compares the position information of the subject SB with the switching condition indicated by the condition information 161 and makes a determination on the basis of the comparison result. For example, in a case where the position of the subject SB exceeds the boundary L of the overlapping region D, the control unit 170 determines that the position of the subject SB satisfies the switching condition. In a case where the control unit 170 determines that the position of the subject SB does not satisfy the switching condition (Step S105: No), the processing proceeds to Step S106.

The control unit 170 acquires a video of the N-th camera 20 (Step S106). For example, the control unit 170 acquires the video of the N-th camera 20 via the communication unit 120. When the control unit 170 finishes the processing in Step S106, the processing proceeds to Step S107.

The control unit 170 controls the display unit 140 so as to display the acquired video (Step S107). For example, the control unit 170 controls the display unit 140 so as to display the video of the N-th camera 20. For example, the control unit 170 controls the display unit 140 so as to switch the video that is being displayed on the display unit 140 to display the video of the N-th camera 20. For example, the control unit 170 controls the display unit 140 so as to synthesize and display the video of the N-th camera 20 and the low-resolution video around the video. As a result, the display unit 140 projects a video including the subject SB of the N-th camera 20 on the virtual plane V. The display unit 140 projects a video in which a low-resolution video is located around a high-resolution video including the subject SB on the virtual plane V. If the control unit 170 finishes the processing in Step S107, the control unit 170 finishes the processing procedure illustrated in FIG. 10.

Further, in a case where the control unit 170 determines that the position of the subject SB is not inside the imaging region of the N-th camera 20 (Step S103: No), the subject SB is not included in the video, and thus, the processing proceeds to Step S108. The control unit 170 sets (N+1)-th as the N-th (Step S108). If the control unit 170 finishes the processing in Step S108, the processing returns to Step S102 described above, and the control unit 170 continues the processing. In other words, the control unit 170 executes a series of processing in Step S102 and subsequent Steps for the adjacent camera 20.

Further, in a case where the control unit 170 determines that the position of the subject SB is not inside the imaging region of the (N+1)-th camera 20 (Step S104: No), the subject SB is not included in the video of the (N+1)-th camera 20, and thus, the processing proceeds to Step S106 described above. The control unit 170 acquires a video of the N-th camera 20 (Step S106). The control unit 170 controls the display unit 140 so as to display the acquired video (Step S107). As a result, the display unit 140 projects a video including the subject SB of the N-th camera 20 on the virtual plane V. If the control unit 170 finishes the processing in Step S107, the control unit 170 finishes the processing procedure illustrated in FIG. 10.

In a case where the control unit 170 determines that the position of the subject SB satisfies the switching condition (Step S105: Yes), the processing proceeds to Step S108 in order to switch the video to be displayed on the display unit 140. The control unit 170 sets (N+1)-th as the N-th (Step S108). If the control unit 170 finishes the processing in Step S108, the processing returns to Step S102 described above, and the control unit 170 continues the processing. In other words, the control unit 170 executes a series of processing in Step S102 and subsequent Steps for the adjacent camera 20.

In the processing procedure illustrated in FIG. 10, the control unit 170 functions as the acquisition unit 171 by executing the processing in Step S101. The control unit 170 functions as the display control unit 172 by executing the processing from Step S102 to Step S108.

While in the processing procedure illustrated in FIG. 10, a case has been described where the control unit 170 performs control to switch the video on the basis of the position information of the subject SB, the present disclosure is not limited thereto. For example, the control unit 170 may use processing procedure of performing control to switch the video on the basis of the position information of the subject SB while focusing on the imaging region of the video that is being displayed on the display unit 140 and the adjacent imaging region in the moving direction of the subject SB.

### [Operation example and display example of head mounted display according to embodiment]

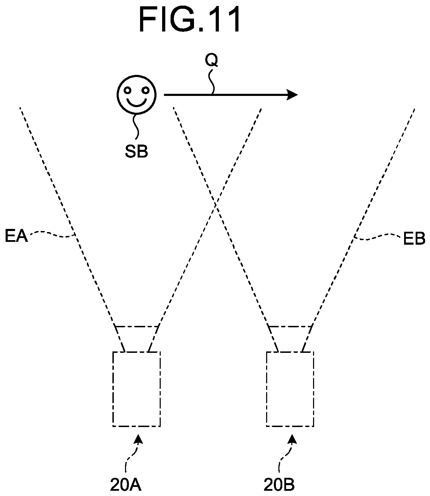

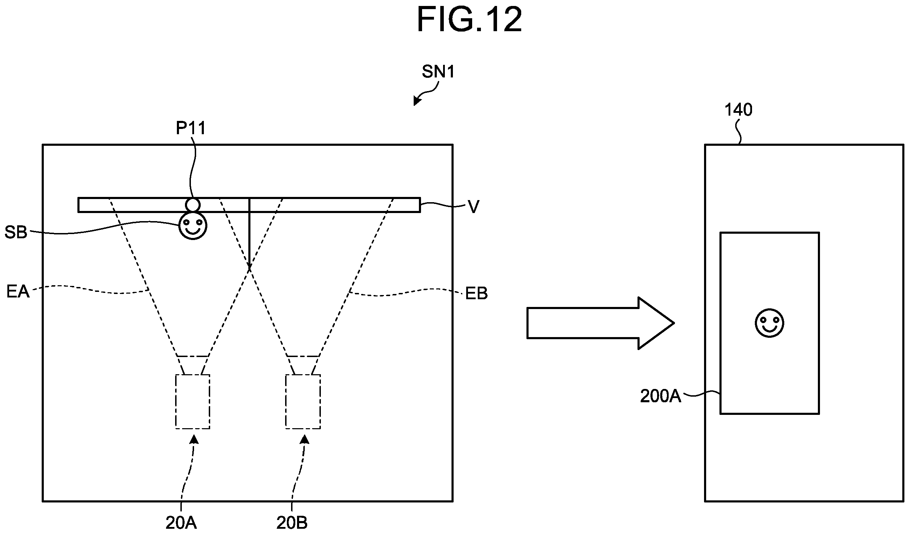

An operation example and a display example of the HMD 10 according to the embodiment will be described with reference to the drawings of FIGS. 11 to 15. FIG. 11 is a diagram illustrating an example of an imaging status of the multi-camera system 1 according to the embodiment. FIGS. 12 to 15 are diagrams illustrating an operation example and a display example of the HMD 10 according to the embodiment.

The multi-camera system 1 captures videos of a range in which the subject SB can move, with the plurality of cameras 20. In the following description, as illustrated in FIG. 11, in the multi-camera system 1, the camera 20A and the camera 20B that are adjacent to each other capture videos of the subject SB that moves in a moving direction Q. The camera 20A can supply to the HMD 10, a video obtained by capturing the video of the subject SB that moves in the imaging region EA. The camera 20B can supply to the HMD 10, a video obtained by capturing the video of the subject SB that moves in the imaging region EB.

In the scene SN1 illustrated in FIG. 12, the subject SB is located at a position P11 inside an imaging region EA of the camera 20A and is not located inside an imaging region EB of the camera 20B. In this case, the camera 20A captures a video 200A including the subject SB and supplies the video 200A to the HMD 10. The camera 20B captures a video 200B not including the subject SB and supplies the video 200B to the HMD 10. The HMD 10 specifies a position P11 of the subject SB on the virtual plane V on the basis of the position information acquired from the position measurement device 30. The HMD 10 determines that the subject SB is located only inside the imaging region EA of the camera 20A and acquires a video 200A from the camera 20A. The HMD 10 controls the display unit 140 so as to display the acquired video 200A. As a result, the HMD 10 displays the video 200A in a display area of the camera 20A of the display unit 140.

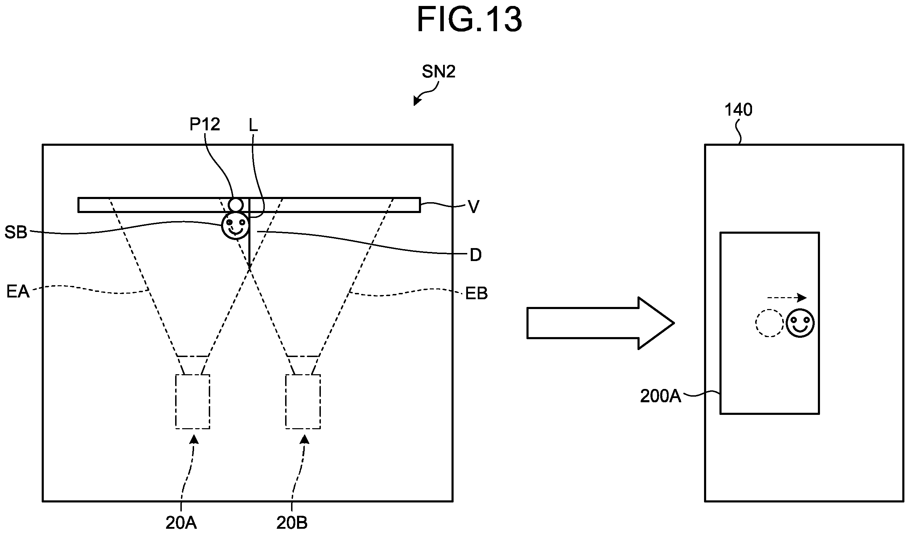

In the scene SN2 illustrated in FIG. 13, the subject SB is located at a position P12 inside the overlapping region D between the imaging region EA of the camera 20A and the imaging region EB of the camera 20B. In this case, the camera 20A captures a video 200A including the subject SB and supplies the video 200A to the HMD 10. The camera 20B captures a video 200B including the subject SB and supplies the video 200B to the HMD 10. The HMD 10 specifies a position P12 of the subject SB on the virtual plane V on the basis of the position information acquired from the position measurement device 30. The HMD 10 determines that the subject SB is located in the overlapping region D between the camera 20A and the camera 20B. The HMD 10 compares a position P12 of the subject SB with the boundary L, determines that the subject SB does not exceed the boundary L and acquires the video 200A from the camera 20A. In other words, the HMD 10 determines not to switch the video 200A of the camera 20A. The HMD 10 controls the display unit 140 so as to display the acquired video 200A. As a result, the HMD 10 continuously displays the video 200A in which the subject SB moves in a display area of the camera 20A of the display unit 140.

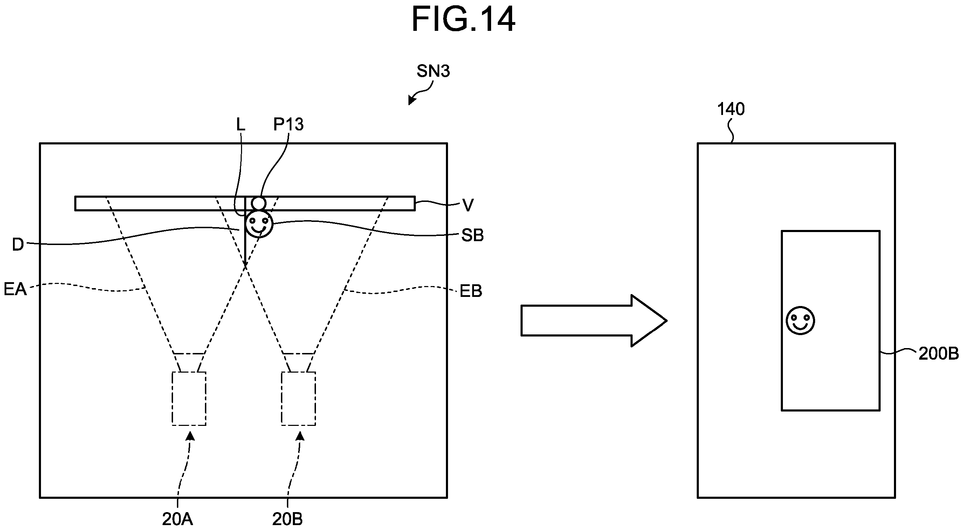

In the scene SN3 illustrated in FIG. 14, the subject SB is located at a position P13 inside the overlapping region D between the imaging region EA of the camera 20A and the imaging region EB of the camera 20B. In this case, the camera 20A captures a video 200A including the subject SB and supplies the video 200A to the HMD 10. The camera 20B captures a video 200B including the subject SB and supplies the video 200B to the HMD 10. The HMD 10 specifies a position P13 of the subject SB on the virtual plane V on the basis of the position information acquired from the position measurement device 30. The HMD 10 determines that the subject SB is located in the overlapping region D between the camera 20A and the camera 20B. The HMD 10 compares a position P13 of the subject SB with the boundary L, determines that the subject SB exceeds the boundary L and acquires the video 200B from the camera 20B. In other words, the HMD 10 determines to switch from the video 200A of the camera 20A to the video 200B of the camera 20B. The HMD 10 controls the display unit 140 so as to display the acquired video 200B. As a result, the HMD 10 displays the video 200B in a display area of the camera 20B of the display unit 140. Note that the display area of the camera 20B of the display unit 140 is an area adjacent to the display area of the camera 20A of the display unit 140.

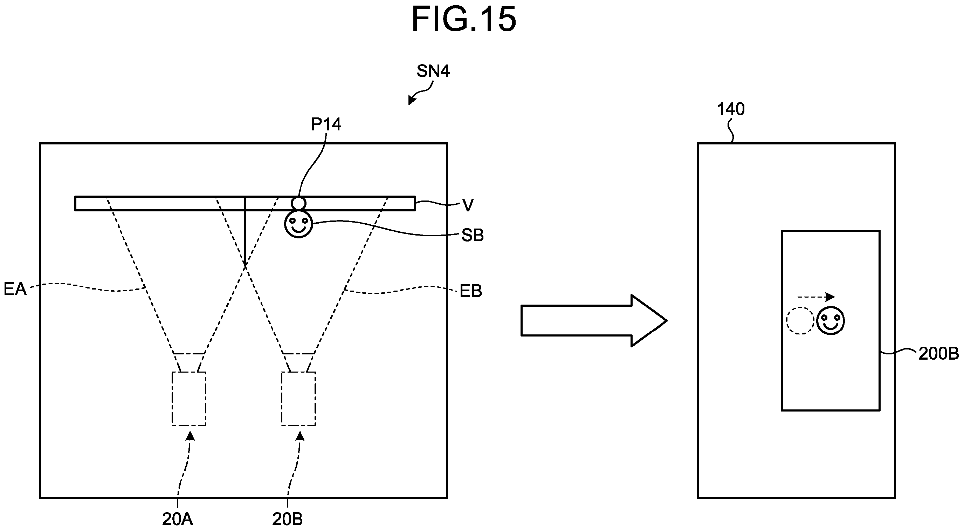

In the scene SN4 illustrated in FIG. 15, the subject SB is not located inside the imaging region EA of the camera 20A, but located at a position P14 inside the imaging region EB of the camera 20B. In this case, the camera 20A captures a video 200A not including the subject SB and supplies the video 200A to the HMD 10. The camera 20B captures a video 200B including the subject SB and supplies the video 200B to the HMD 10. The HMD 10 specifies a position P14 of the subject SB on the virtual plane V on the basis of the position information acquired from the position measurement device 30. The HMD 10 determines that the subject SB is located only inside the imaging region EB of the camera 20B and acquires a video 200B from the camera 20B. In other words, the HMD 10 determines not to switch the video 200B of the camera 20B. The HMD 10 controls the display unit 140 so as to display the acquired video 200B. As a result, the HMD 10 continuously displays the video 200B in which the subject SB moves in a display area of the camera 20B of the display unit 140.

As described above, the HMD 10 according to the embodiment can switch the video among the videos captured by the plurality of cameras 20 on the basis of the position information of the subject SB and display the video on the display unit 140. As a result, the HMD 10 can display the videos in which the subject SB is captured with the plurality of cameras 20 as a single synthesized video without using the stitching processing, or the like, as in related art. As a result, the HMD 10 does not require high-load processing, so that performance can be guaranteed. The HMD 10 does not require feature point recognition processing, or the like, by image processing, so that the imaging conditions of the plurality of cameras 20 can be relaxed. The HMD 10 can promote application to content having complicated imaging conditions such as video distribution and live distribution using the plurality of cameras 20.

By using the position information of the subject SB, the HMD 10 of the present embodiment can cut out the videos of the subject SB or a periphery thereof and use the cut out videos for presentation, make a notification of a portion to be visually recognized in VR space having a wide visual field or create new content by combining a plurality of cut out videos.

While a case has been described where the HMD 10 of the present embodiment displays the videos of the plurality of cameras 20 on the planar virtual plane V, the present disclosure is not limited thereto. For example, the virtual plane V may have other shapes such as a curved surface. For example, the HMD 10 may reproduce an omnidirectional video by displaying the video on the virtual plane V which is an inner surface of the sphere. Further, the HMD 10 may switch and display the video including the subject SB on the display unit 140, display the video not including the subject SB at low resolution or display a still image of the video not including the subject SB.

The above-described embodiment is an example, and various modifications and applications are possible.

### [Modification (1) of embodiment]

For example, while it has been assumed that the multi-camera system 1 according to the embodiment has a plurality of cameras 20 having the same angle of view, the present disclosure is not limited thereto. For example, the multi-camera system 1 may use a plurality of cameras 20 having different angles of view, installation directions, and the like.

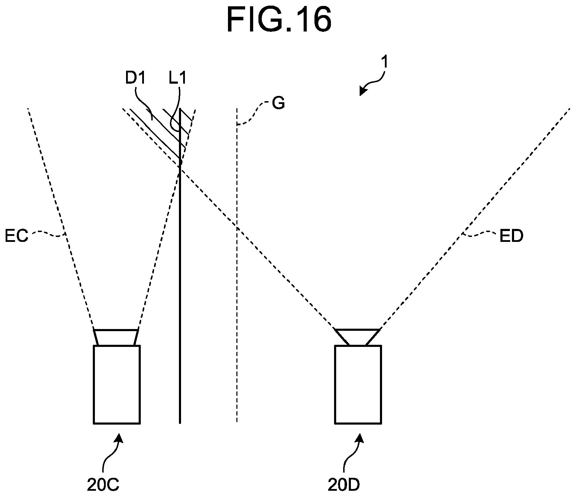

FIG. 16 is a diagram for explaining a configuration example of cameras of a multi-camera system 1 of modification (1) of the embodiment. As illustrated in FIG. 16, the multi-camera system 1 includes a camera 20C and a camera 20D having different angles of view. In the multi-camera system 1, for example, by disposing the cameras 20 having different angles of view, installation directions, and the like, the movement range (imaging range) of the subject SB can be curved, or the intervals between the plurality of cameras 20 can be made irregular.

The camera 20C and the camera 20D are provided outside the HMD 10 and capture videos of real space in which the camera 20C and the camera 20D are provided. The camera 20C is provided to capture a video of an imaging region EC. The camera 20D is provided to capture a video of an imaging region ED wider than the imaging region EC. In the example illustrated in FIG. 16, the position indicated by a straight line G is the center of the camera 20C and camera 20D which are adjacent to each other.

In this case, in the HMD 10, a boundary L that passes through a position where overlapping of the imaging region EC of the camera 20C and the imaging region ED of the camera 20D starts is set. In other words, in the HMD 10, the boundary L is set closer to the camera 20C than the straight line G. In a case where the subject SB is located in the overlapping region D1, the HMD 10 controls the display unit 140 so as to switch the video between a video of the camera 20C and a video of the camera 20D on the basis of a positional relationship between the position of the subject SB and the boundary L1.

### [Modification (2) of embodiment]

For example, while a case has been described where the HMD 10 according to the embodiment switches the video among the videos of the plurality of cameras 20 on the basis of the position of the subject SB, the present disclosure is not limited thereto. In modification (2), the HMD 10 takes into account positional relationships between the subject SB and objects around the subject SB.

For example, in a case where the HMD 10 switches overlapping of the videos on the basis of the position of the subject SB, there is a possibility that displacement occurs in a background behind the subject SB, an object such as a human, or the like. For example, in a case where there is a background object that attracts the user U in the background of the video, there is a possibility that it becomes clear that a surrounding object is displaced when the HMD 10 switches the video. The object includes, for example, a human or an object around or behind the subject SB, an object worn on the subject SB, and the like.

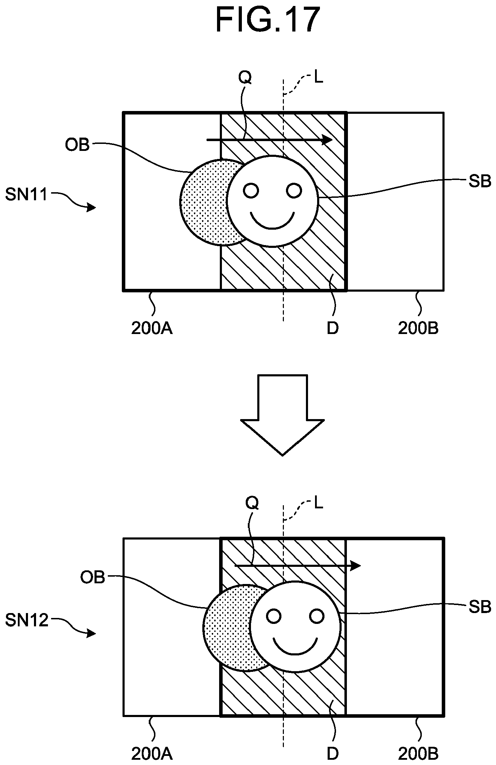

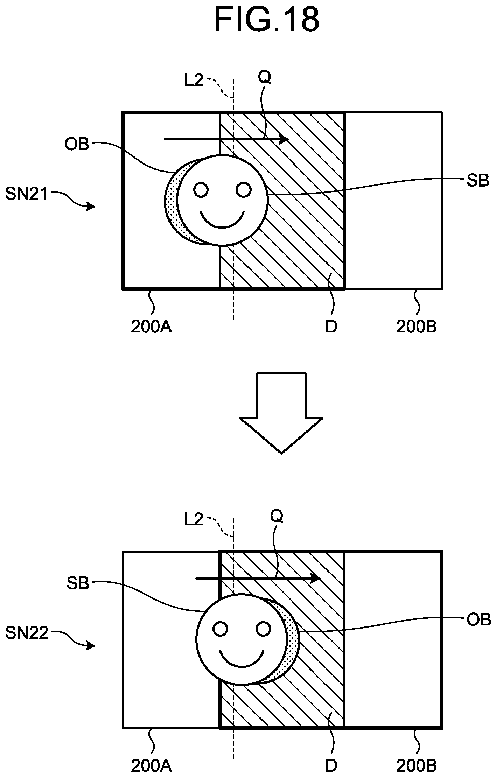

FIGS. 17 and 18 are diagrams illustrating an example of switching of a video of a head mounted display 10 according to modification (2) of the embodiment. As illustrated in FIG. 17, in the multi-camera system 1, the camera 20A captures the video 200A, and the camera 20B captures the video 200B. The video 200A and the video 200B are videos including the subject SB moving in the moving direction Q and an object OB that is a background of the subject SB. The HMD 10 sets a boundary L that is a switching condition of the video 200A and the video 200B. In the example illustrated in FIG. 17, the object OB moves together with the subject SB.

In a scene SN11, for example, the HMD 10 recognizes the object OB on the basis of the video 200A or recognizes the object OB on the basis of a distance to the object around the subject SB measured by the position measurement device 30. The HMD 10 determines that the subject SB exceeds the boundary L in the overlapping region D, but a ratio of the object OB appearing in the video 200B is equal to or less than a determination threshold. In this case, the HMD 10 displays the video 200A including the subject SB and the object OB on the display unit 140.

In a scene SN12, the HMD 10 determines that the subject SB exceeds the boundary L in the overlapping region D, and the ratio of the object OB appearing in the video 200B is greater than the determination threshold. In this case, the HMD 10 controls the display unit 140 so as to switch the video 200A that is being displayed on the display unit 140 to the video 200B including the subject SB and the object OB.

As illustrated in FIG. 18, in the multi-camera system 1, the camera 20A captures the video 200A, and the camera 20B captures the video 200B. The video 200A and the video 200B are videos including the subject SB moving in the moving direction Q and an object OB that is a background of the subject SB. The HMD 10 sets a boundary L that is a switching condition of the video 200A and the video 200B. In the example illustrated in FIG. 18, the object OB moves together with the subject SB and is imaged at a position where the object OB overlaps with the subject SB.

In a scene SN21, for example, the HMD 10 recognizes the object OB on the basis of the video 200A or recognizes the object OB on the basis of a distance to the object around the subject SB measured by the position measurement device 30. The HMD 10 estimates that the subject SB is located in front of the object OB and hides the object OB in the video 200A. The HMD 10 determines whether to switch the video using a boundary L2 of the condition information 161 corresponding to such a scene. The boundary L2 is, for example, a boundary set by a content creator, or the like. The HMD 10 determines to display the video 200A on the display unit 140 on the basis of a ratio at which the subject SB and the object OB exceed the boundary L2 in the overlapping region D. The HMD 10 displays the video 200A including the subject SB and the object OB on the display unit 140.

In a scene SN22, the HMD 10 determines to switch the video to the video 200B on the basis of the ratio at which the subject SB and the object OB exceed the boundary L2 in the overlapping region D. Therefore, the HMD 10 controls the display unit 140 so as to switch the video 200A that is being displayed on the display unit 140 to the video 200B including the subject SB and the object OB.

As described above, even if the subject SB and the object OB are moving, the HMD 10 can switch and display the video among the videos captured by the plurality of cameras 20 without causing any discomfort. This results in making it possible for the HMD 10 to improve visibility of the video by reducing a possibility that the object OB is visually recognized in a state where the object OB is displaced when the video is switched.

Note that modification (1) and modification (2) of the embodiment may be combined with technical ideas of other embodiments and modifications.

### [Hardware Configuration]

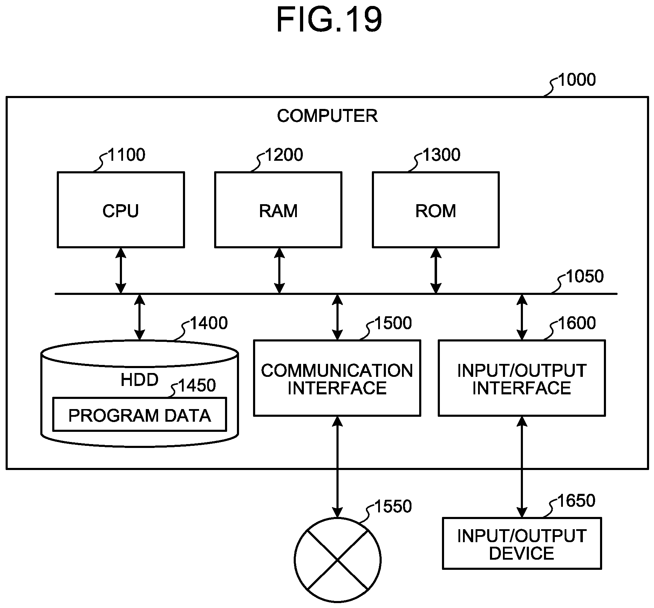

The display control device according to the above-described embodiment is implemented by, for example, a computer 1000 having a configuration as illustrated in FIG. 19. Hereinafter, a display control device according to an embodiment will be described as an example. FIG. 19 is a hardware configuration diagram illustrating an example of the computer 1000 that implements functions of the display control device. The computer 1000 includes a CPU 1100, a RAM 1200, a read only memory (ROM) 1300, a hard disk drive (HDD) 1400, a communication interface 1500, and an input/output interface 1600. Each unit of the computer 1000 is connected by a bus 1050.

The CPU 1100 operates on the basis of a program stored in the ROM 1300 or the HDD 1400, and controls each unit. For example, the CPU 1100 develops a program stored in the ROM 1300 or the HDD 1400 in the RAM 1200, and executes processing corresponding to various programs.

The ROM 1300 stores a boot program such as a basic input output system (BIOS) executed by the CPU 1100 when the computer 1000 is started, a program depending on hardware of the computer 1000, and the like.

The HDD 1400 is a computer-readable recording medium that non-transiently records a program executed by the CPU 1100, data used by the program, and the like. Specifically, the HDD 1400 is a recording medium that records a program according to the present disclosure which is an example of the program data 1450.

The communication interface 1500 is an interface for the computer 1000 to connect to an external network 1550 (for example, the Internet). For example, the CPU 1100 receives data from another device or transmits data generated by the CPU 1100 to another device via the communication interface 1500.

The input/output interface 1600 is an interface for connecting an input/output device 1650 and the computer 1000. For example, the CPU 1100 receives data from an input device such as a keyboard and a mouse via the input/output interface 1600. In addition, the CPU 1100 transmits data to an output device such as a display, a speaker, or a printer via the input/output interface 1600. Furthermore, the input/output interface 1600 may function as a media interface that reads a program or the like recorded in a predetermined recording medium (medium). The medium is, for example, an optical recording medium such as a digital versatile disc (DVD), a magneto-optical recording medium such as a magneto-optical disk (MO), a tape medium, a magnetic recording medium, a semiconductor memory, or the like.

For example, in a case where the computer 1000 functions as the display control device according to the embodiment, the CPU 1100 of the computer 1000 executes a program loaded on the RAM 1200 to implement the control unit 170 including functions such as the acquisition unit 171 and the display control unit 172. In addition, the HDD 1400 stores a program according to the present disclosure and data in the storage unit 160. Note that the CPU 1100 reads the program data 1450 from the HDD 1400 and executes the program data, but as another example, these programs may be acquired from another device via the external network 1550.

As described above, the favorable embodiments of the present disclosure have been described in detail with reference to the accompanying drawings, but the technical scope of the present disclosure is not limited to such examples. It is obvious that persons having ordinary knowledge in the technical field of the present disclosure can conceive various changes and alterations within the scope of the technical idea described in the claims, and it is naturally understood that these changes and alterations belong to the technical scope of the present disclosure.

Furthermore, the effects described in the present specification are merely illustrative or exemplary and are not restrictive. That is, the technology according to the present disclosure can exhibit other effects obvious to those skilled in the art from the description of the present specification in addition to or in place of the above-described effects.

In addition, it is also possible to create a program for causing hardware such as a CPU, a ROM, and a RAM built in a computer to exhibit a function equivalent to the configuration of the display control device, and a computer-readable recording medium recording the program can also be provided.

Further, respective steps in the processing of the display control device in the present specification do not necessarily have to be performed in chronological order in the order described in the flowchart. For example, the respective steps in the processing of the display control device may be performed in order different from the order described in the flowchart or may be performed in parallel.

While in the present embodiment, a case has been described where the plurality of cameras 20 is provided in a row along the moving direction of the subject SB in the multi-camera system 1, the present disclosure is not limited thereto. For example, in the multi-camera system 1, a plurality of cameras 20 in which adjacent imaging regions partially overlap with each other may be arranged in a matrix. In other words, the multi-camera system 1 may include the plurality of cameras 20 that is arranged side by side in the moving direction and in the vertical direction (height direction) of the subject SB. In this case, the display control device may switch and display the videos of the cameras 20 adjacent in the vertical direction on the basis of the position information of the subject SB in the overlapping region in the vertical direction.

### (Effects)

The HMD 10 includes the control unit 170 configured to control the display unit 140 so as to display a plurality of videos of real space captured by a plurality of cameras 20 having adjacent imaging regions that partially overlap with each other, and the control unit 170 controls the display unit 140 so as to switch a video among the videos including the subject SB and display the video on the basis of position information of the subject SB in an overlapping region D where the adjacent imaging regions overlap with each other.

As a result, if the subject SB moves to the overlapping region D, the HMD 10 can control the display unit 140 so as to switch and display the video including the subject SB on the basis of the position information of the subject SB in the overlapping region D. As a result, the HMD 10 does not require high-load processing on the videos captured by the plurality of cameras 20, so that performance can be guaranteed. Further, the HMD 10 does not require recognition processing, or the like, of feature points by image processing, so that it is possible to contribute to relaxation of imaging conditions of the plurality of cameras 20 in the multi-camera system 1. In addition, the HMD 10 can promote application to content having complicated imaging conditions such as video distribution and live distribution using the plurality of cameras 20.

In the HMD 10, the overlapping region is a region where a part of the videos of the adjacent cameras 20 overlaps on the virtual plane V that displays the video. In the HMD 10, the control unit 170 controls the display unit 140 so as to switch and display the videos including the subject SB on the virtual plane V on the basis of the position information of the subject SB in the overlapping region D.

As a result, if the position information of the subject SB moves to the overlapping region D on the virtual plane V, the HMD 10 can control the display unit 140 so as to switch and display the video including the subject SB on the basis of the position information. As a result, the HMD 10 can prevent decrease in visibility of the video displayed on the virtual plane V by switching the video on the basis of the overlapping region D visually recognized by the user U on the virtual plane V and the position information of the subject SB.

In the HMD 10, the control unit 170 controls the display unit 140 so as to switch and display the video including the subject SB on the basis of whether or not the position information of the subject SB satisfies the switching condition of the overlapping region D.

As a result, the HMD 10 can control the display unit 140 so as to switch and display the video including the subject SB in accordance with a relationship between the switching condition of the overlapping region D and the position information of the subject SB. As a result, the HMD 10 can relax the positional relationship of the plurality of cameras 20 to be provided by giving flexibility to the overlapping region D of the videos captured by the plurality of cameras 20.

In the HMD 10, the switching condition has the boundary L dividing the overlapping region D, and the control unit 170 determines whether or not the position information satisfies the switching condition on the basis of a positional relationship between the position information and the boundary L in the overlapping region D.

As a result, the HMD 10 can switch and display the video including the subject SB on the basis of the positional relationship between the position information and the boundary L in the overlapping region D. As a result, the HMD 10 can guarantee the performance with higher accuracy by simplifying processing related to the switching condition of the overlapping region D.

In the HMD 10, in a case where the position information of the subject SB does not satisfy the switching condition, the control unit 170 controls the display unit 140 so as to display the video of one camera 20 that has captured a video of the subject SB. In a case where the position information of the subject SB satisfies the switching condition, the control unit 170 controls the display unit 140 so as to display the video of the camera 20 that has captured a video of the subject SB and that is adjacent to the one camera 20.

As a result, the HMD 10 can switch the video from the video of one camera 20 to the video of the adjacent camera 20 in accordance with the relationship between the switching condition of the overlapping region D and the position information of the subject SB. As a result, the HMD 10 can easily switch the video between the videos including the subject SB captured by the adjacent cameras 20, so that the performance can be guaranteed with higher accuracy.

In the HMD 10, the control unit 170 controls the display unit 140 so as to display a video obtained by cutting out a region of the subject SB on the virtual plane V.

As a result, the HMD 10 can control the display unit 140 so as to switch and display the video obtained by cutting out the region of the subject SB on the virtual plane V on the basis of the position information of the subject SB in the overlapping region D. As a result, the HMD 10 can simplify processing of displaying the video by cutting out the region of the subject SB, so that the performance can be guaranteed with higher accuracy.

In the HMD 10, the control unit 170 controls the display unit 140 so as to synthesize and display the video including the subject SB and a surrounding video indicating the surroundings of the video.

As a result, in a case where the video including the subject SB is switched on the basis of the position information of the subject SB in the overlapping region D, the HMD 10 can synthesize the video and the surrounding video and display the synthesized video on the display unit 140. The HMD 10 can be implemented through simple processing of synthesizing the video and the surrounding video, so that performance can be guaranteed even if the video including the subject SB and the surrounding video are displayed.

In the HMD 10, the resolution of the surrounding video is lower than that of the video including the subject.

As a result, in a case where the video including the subject SB is switched on the basis of the position information of the subject SB in the overlapping region D, the HMD 10 can synthesize the video and the low-resolution surrounding video and display the synthesized video on the display unit 140. The HMD 10 can further simplify the processing of synthesizing the video and the surrounding video, so that performance can be guaranteed even if the video including the subject SB and the surrounding video are displayed.

In the HMD 10, the control unit 170 acquires the position information from the position measurement device 30 that measures relative positions between the subject SB and the cameras 20 and controls the display unit 140 so as to switch the video among the videos including the subject SB and display the video on the basis of the acquired position information.

As a result, the HMD 10 can control the display unit 140 so as to switch and display the video including the subject SB on the basis of the position information indicating relative positions between the subject SB moving in a wide range and the plurality of cameras 20. As a result, the HMD 10 can improve accuracy of switching the video by switching the video including the subject SB on the basis of the relative positions between the subject SB and the cameras 20. Further, the HMD 10 can improve user-friendliness when the plurality of cameras 20 is provided in the multi-camera system 1 by enabling the plurality of cameras 20 to be provided in a wide range.

In the HMD 10, the control unit 170 controls the display unit 140 so as to switch the video to a video of the adjacent camera 20 and display the video on the basis of a positional relationship among the subject SB, the object OB around the subject SB, and the boundary L.

As a result, the HMD 10 can switch and display the videos of the adjacent cameras 20 on the display unit 140 on the basis of the positional relationship among the subject SB, the surrounding objects OB, and the boundary L. As a result, in a case where the subject SB moves in the overlapping region D, the HMD 10 can cause the user to naturally recognize the positional relationship between the subject SB and the object OB even if the video is switched between the videos of the adjacent cameras 20.

In the HMD 10, in a case where the subject SB and the object OB satisfy a switching condition, the control unit 170 controls the display unit 140 so as to switch the video to the video of the adjacent camera 20 and display the video.

As a result, the HMD 10 can switch and display the video of the camera 20 on the display unit 140 in a case where the subject SB and the object OB satisfy the switching condition. Further, in a case where both the subject SB and the object OB do not satisfy the switching condition, the HMD 10 does not switch the video of the camera 20. As a result, in a case where the subject SB moves in the overlapping region D, the HMD 10 can visually recognize the object OB at consecutive positions by switching the video.

In the HMD 10, the control unit 170 controls the display unit 140 so as to switch and display the video in which the position information of the subject SB and the virtual plane V match.

As a result, in a case where the subject SB is located in the overlapping region D, the HMD 10 can switch and display the video in which the position information of the subject SB matches the virtual plane V on the display unit 140. As a result, in a case where the subject SB moves in the overlapping region D, the HMD 10 can cause the user U to visually recognize the image as a continuous video even if the video is switched between the videos of the adjacent cameras 20.

In the HMD 10, the plurality of cameras 20 is arranged in a range in which the subject SB is movable, and the control unit 170 acquires the video to be displayed on the display unit 140 from the camera 20.

As a result, in a case where the subject SB moves in a movable range, the HMD 10 can acquire the video to be displayed on the display unit 140 from the camera 20. This results in eliminating the need for processing of acquiring the videos from all of the plurality of cameras 20 by the HMD 10 acquiring the video from the camera 20 in a case where the video is displayed on the display unit 140, so that the performance can be guaranteed.

A display control method to be performed by a computer, includes controlling the display unit 140 so as to display a plurality of videos of real space captured by a plurality of cameras 20 having adjacent imaging regions that partially overlap with each other, and controlling the display unit 140 so as to switch a video among the videos including the subject SB and display the video on the basis of position information of the subject SB in the overlapping region D where the adjacent imaging regions overlap with each other.

As a result, if the subject SB moves to the overlapping region D, the display control method makes a computer control the display unit 140 so as to switch and display the video including the subject SB on the basis of the position information of the subject SB in the overlapping region D. As a result, the display control method does not require high-load processing on the videos captured by the plurality of cameras 20, so that performance can be guaranteed. Further, the display control method does not require recognition processing, or the like, of feature points by image processing, so that it is possible to contribute to relaxation of imaging conditions of the plurality of cameras 20 in the multi-camera system 1. In addition, the display control method can promote application to content having complicated imaging conditions such as video distribution and live distribution using the plurality of cameras 20.

A computer-readable recording medium storing a program for causing a computer to implement controlling the display unit 140 so as to display a plurality of videos of real space captured by a plurality of cameras 20 having adjacent imaging regions that partially overlap with each other, and controlling the display unit 140 so as to switch a video among the videos including the subject SB and display the video on the basis of position information of the subject SB in the overlapping region D where the adjacent imaging regions overlap with each other.

As a result, if the subject SB moves to the overlapping region D, the computer-readable recording medium makes a computer control the display unit 140 so as to switch and display the video including the subject SB on the basis of the position information of the subject SB in the overlapping region D. As a result, the computer-readable recording medium does not require high-load processing on the videos captured by the plurality of cameras 20, so that performance can be guaranteed. Further, the computer-readable recording medium does not require recognition processing, or the like, of feature points by image processing, so that it is possible to contribute to relaxation of imaging conditions of the plurality of cameras 20 in the multi-camera system 1. In addition, the computer-readable recording medium can promote application to content having complicated imaging conditions such as video distribution and live distribution using the plurality of cameras 20.

Note that the following configurations also belong to the technical scope of the present disclosure.
(1) A display control device comprising:
   a control unit configured to control a display device so as to display videos of real space captured by a plurality of cameras having adjacent imaging regions that partially overlap with each other,
   wherein the control unit controls the display device so as to switch a video among the videos including a subject and display the video on a basis of position information of the subject in an overlapping region where the adjacent imaging regions overlap with each other.
(2) The display control device according to (1),
   wherein the overlapping region is a region where the videos of the cameras adjacent to each other partially overlap with each other on a virtual plane that displays the video, and
   the control unit controls the display device so as to switch the video among the videos including the subject and display the video on the virtual plane on a basis of position information of the subject in the overlapping region.
(3) The display control device according to (2),
   wherein the control unit controls the display device so as to switch the video among the videos including the subject and display the video on a basis of whether or not the position information of the subject satisfies a switching condition of the overlapping region.
(4) The display control device according to (3),
   wherein the switching condition has a boundary dividing the overlapping region, and
   the control unit determines whether or not the position information satisfies the switching condition on a basis of a positional relationship between the position information and the boundary in the overlapping region.
(5) The display control device according to (3) or (4),
   wherein the control unit
   controls the display device so as to display the video of one of the cameras that has captured the video of the subject in a case where the position information of the subject does not satisfy the switching condition, and
   controls the display device so as to display the video of the camera that has captured the video of the subject and that is adjacent to the one of the cameras in a case where the position information of the subject satisfies the switching condition.
(6) The display control device according to any one of (2) to (5),
   wherein the control unit controls the display device so as to display the video obtained by cutting out a region of the subject on the virtual plane.
(7) The display control device according to any one of (2) to (6),
   wherein the control unit controls the display device so as to synthesize and display the videos including the subject and a surrounding video indicating surroundings of the videos.
(8) The display control device according to (7),
   wherein the surrounding video has lower resolution than resolution of the videos including the subject.
(9) The display control device according to any one of (2) to (8),
   wherein the control unit acquires the position information from a position measurement device that measures relative positions between the subject and the cameras and controls the display device so as to switch the video among the videos including the subject and display the video on a basis of the acquired position information.
(10) The display control device according to (4),
   wherein the control unit controls the display device so as to switch the video to a video of the adjacent camera and display the video on a basis of a positional relationship among the subject, an object around the subject, and the boundary.
(11) The display control device according to (10),
   wherein in a case where the subject and the object satisfy a switching condition, the control unit controls the display device so as to switch the video to the video of the adjacent camera and display the video.
(12) The display control device according to any one of (2) to (11),
   wherein the control unit controls the display device so as to switch the video among videos in which the position information of the subject matches the virtual plane and display the video.
(13) The display control device according to any one of (1) to (12),
   wherein the plurality of cameras is disposed in a range in which the subject is movable, and
   the control unit acquires the video to be displayed on the display device from the camera.
(14) A display control method to be performed by a computer,
   the display control method comprising:
   controlling a display device so as to display videos of real space captured by a plurality of cameras having adjacent imaging regions that partially overlap with each other; and
   controlling the display device so as to switch a video among the videos including a subject and display the video on a basis of position information of the subject in an overlapping region where the adjacent imaging regions overlap with each other.
(15) A computer-readable recording medium storing a program for causing
   a computer to implement:
   controlling a display device so as to display videos of real space captured by a plurality of cameras having adjacent imaging regions that partially overlap with each other; and
   controlling the display device so as to switch a video among the videos including a subject and display the video on a basis of position information of the subject in an overlapping region where the adjacent imaging regions overlap with each other.
(16) A multi-camera system including a plurality of cameras provided at different positions and having adjacent imaging regions that partially overlap with each other, a display control device, and a display device,
   the display control device including a control unit configured to control the display device so as to display videos of real space captured by a plurality of cameras having adjacent imaging regions that partially overlap with each other, and
   the control unit controlling the display device so as to switch a video among the videos including a subject and display the video on the basis of position information of the subject in an overlapping region where the adjacent imaging regions overlap with each other.
(17) The multi-camera system according to (16), further including
   a position measurement device configured to measure relative positions between the subject and the cameras,
   the control unit acquiring the position information from the position measurement device and controlling the display device so as to switch the video among the videos including the subject and display the video on the basis of the acquired position information.

### Reference Signs List

- 1: MULTI-CAMERA SYSTEM
- 10: HEAD MOUNTED DISPLAY (HMD)
- 20: CAMERA
- 30: POSITION MEASUREMENT DEVICE
- 110: SENSOR UNIT
- 120: COMMUNICATION UNIT
- 130: OPERATION INPUT UNIT
- 140: DISPLAY UNIT
- 150: SPEAKER
- 160: STORAGE UNIT
- 170: CONTROL UNIT
- 171: ACQUISITION UNIT
- 172: DISPLAY CONTROL UNIT
- L: BOUNDARY
- SB: SUBJECT
- U: USER
- V: VIRTUAL PLANE

## Claims

1. A display control device comprising:
a control unit configured to control a display device so as to display videos of real space captured by a plurality of cameras having adjacent imaging regions that partially overlap with each other,
wherein the control unit controls the display device so as to switch a video among the videos including a subject and display the video on a basis of position information of the subject in an overlapping region where the adjacent imaging regions overlap with each other.

2. The display control device according to claim 1,
wherein the overlapping region is a region where the videos of the cameras adjacent to each other partially overlap with each other on a virtual plane that displays the video, and
the control unit controls the display device so as to switch the video among the videos including the subject and display the video on the virtual plane on a basis of position information of the subject in the overlapping region.

3. The display control device according to claim 2,
wherein the control unit controls the display device so as to switch the video among the videos including the subject and display the video on a basis of whether or not the position information of the subject satisfies a switching condition of the overlapping region.

4. The display control device according to claim 3,
wherein the switching condition has a boundary dividing the overlapping region, and
the control unit determines whether or not the position information satisfies the switching condition on a basis of a positional relationship between the position information and the boundary in the overlapping region.

5. The display control device according to claim 4,
wherein the control unit
controls the display device so as to display the video of one of the cameras that has captured the video of the subject in a case where the position information of the subject does not satisfy the switching condition, and
controls the display device so as to display the video of the camera that has captured the video of the subject and that is adjacent to the one of the cameras in a case where the position information of the subject satisfies the switching condition.

6. The display control device according to claim 5,
wherein the control unit controls the display device so as to display the video obtained by cutting out a region of the subject on the virtual plane.

7. The display control device according to claim 6,
wherein the control unit controls the display device so as to synthesize and display the videos including the subject and a surrounding video indicating surroundings of the videos.

8. The display control device according to claim 7,
wherein the surrounding video has lower resolution than resolution of the videos including the subject.

9. The display control device according to claim 1,
wherein the control unit acquires the position information from a position measurement device that measures relative positions between the subject and the cameras and controls the display device so as to switch the video among the videos including the subject and display the video on a basis of the acquired position information.

10. The display control device according to claim 4,
wherein the control unit controls the display device so as to switch the video to a video of the adjacent camera and display the video on a basis of a positional relationship among the subject, an object around the subject, and the boundary.

11. The display control device according to claim 10,
wherein in a case where the subject and the object satisfy a switching condition, the control unit controls the display device so as to switch the video to the video of the adjacent camera and display the video.

12. The display control device according to claim 2,
wherein the control unit controls the display device so as to switch the video among videos in which the position information of the subject matches the virtual plane and display the video.

13. The display control device according to claim 1,
wherein the plurality of cameras is disposed in a range in which the subject is movable, and
the control unit acquires the video to be displayed on the display device from the camera.

14. A display control method to be performed by a computer,
the display control method comprising:
controlling a display device so as to display videos of real space captured by a plurality of cameras having adjacent imaging regions that partially overlap with each other; and
controlling the display device so as to switch a video among the videos including a subject and display the video on a basis of position information of the subject in an overlapping region where the adjacent imaging regions overlap with each other.

15. A computer-readable recording medium storing a program for causing
a computer to implement:
controlling a display device so as to display videos of real space captured by a plurality of cameras having adjacent imaging regions that partially overlap with each other; and
controlling the display device so as to switch a video among the videos including a subject and display the video on a basis of position information of the subject in an overlapping region where the adjacent imaging regions overlap with each other.
